# EUROPEAN PATENT APPLICATION

(11) **EP 4 582 185 A1**
(43) Date of publication of application: **09.07.2025**
(21) Application number: 24170721.5
(22) Date of filing: 17.04.2024
(51) Int. Cl.: B01L 7/00

(54) **POLYMERASE CHAIN REACTION HEATING DEVICE AND POLYMERASE CHAIN REACTION TEMPERATURE CONTROL SYSTEM**

(30) Priority: 02.01.2024 TW 113100136
(71) Applicant: Credo Diagnostics Biomedical Pte. Ltd., Singapore 248373 (SG)
(72) Inventor: Ou, Yu-Cheng, New Taipei City 221 (TW); Chen, Han-Yi, New Taipei City 221 (TW); Liu, Laing-Wei, New Taipei City 221 (TW); Cheng, Ting-Fan, New Taipei City 221 (TW)
(74) Representative: Straus, Alexander

(57) **Abstract**

A polymerase chain reaction heating device (12) and a related system can include a circuit board (26), a heater (28), a first thermal conductive component (30) and a second thermal conductive component (32). The circuit board (26) has an opening structure (34). The heater (28) is disposed inside and partly exposed via the opening structure (34). The first thermal conductive component (30) includes a first reagent storage portion (44) and a first heat conduction portion (46). The second thermal conductive component (32) includes a second reagent storage portion (48) and a second heat conduction portion (50). The first reagent storage portion (44) and the second reagent storage portion (48) can be used to form a reagent holder (52). The first heat conduction portion (46) and the second heat conduction portion (50) respectively abut against two opposite surfaces of the heater (28) for transmitting the heat towards the reagent holder (52).

## Description

### Field of the Invention

The present invention relates to a polymerase chain reaction heating device and a related polymerase chain reaction temperature control system according to the pre-characterizing clauses of claims 1 and 9.

### Background of the Invention

Polymerase Chain Reaction (PCR) is a technique for rapidly amplifying DNA. The principle and main operation steps are as follows: (a) denaturing: a double-stranded DNA is dissociated into single-stranded DNAs by incubation at 90° C. to 95° C., and then the single-stranded DNAs are used as templates for replication; (b) primer annealing: when the temperature is lowered to an appropriate temperature, a primer will be attached to a correct target gene position; and (c) primer extension: a reaction temperature is corrected to 72° C., and the DNA polymerase successively attaches deoxy-ribonucleotide triphosphate (dNTPs) to the primer to synthesize another strand of a new DNA fragment.

Nucleic acid amplification is repeated continuously through the three steps: denaturing, primer annealing and primer extension. The number of target genes can be doubled in each three-step operation. If the three-step operations are set to be cyclically performed by 40 times, the number of target genes can be amplified by nearly 109 times, and a large number of target gene fragments can be obtained by the PCR in vitro. Therefore, as one of molecular diagnostic techniques widely used in clinical diagnosis at present, the PCR can be applied to items including diagnosis of genetic diseases, diagnosis of pathogenic bacteria, diagnosis and prognosis evaluation of tumors and cancers, basic research and the like, so that the PCR is also used as a technique that is extensively used by the current clinical diagnosis.

The conventional polymerase chain reaction heating device includes a circuit board, a heater and a thermal conductive component. The heater is welded on the lateral surface of the circuit board. The thermal conductive component is attached to the lateral surface of the circuit board to contact and cover the heater. The thermal conductive component has the reagent container. The conventional polymerase chain reaction heating device uses the temperature-controlled metal as the heater, and the temperature-controlled metal has a rapid temperature adjustment function to repeatedly execute heating and cooling operations for achieving the reaction temperature of steps of the denaturing, the primer annealing and the primer extension. The reagent container made of plastic is heated to adjust the temperature of the reagent and the reactant (which contains the target gene fragments) inside the reagent container, so as to amplify the target gene and detect the fluorescent signal.

When the heater is switched on, the heat generated by the heater is conducted to the reagent container via the thermal conductive component, and the reagent and the reactant inside the reagent container are processed by the steps of the denaturing, the primer annealing and the primer extension. The heater quickly heats up and cools down the reagent and reactant inside the reagent container within the range of 55 to 98 degrees Celsius in a short period, so that energy provided by the heater is much greater than 98 degrees Celsius for the rapid heating function. However, the thickness of the conventional polymerase chain reaction heating device is a sum of thicknesses of the circuit board, the heater and the thermal conductive component, which has the larger size; the heater has to generate more energy to avoid heat dissipation or low heat conduction efficiency, for quickly raising the temperature of the reagent and reactant inside the reagent container. Besides, the thermal conductive component directly covers the contact between the heater and the circuit board, and the contact is easily melted and damaged due to the heat generated by the heater and accumulated in the thermal conductive component, which results in separation of the heater. Therefore, design of a polymerase chain reaction heating device of reducing the thickness of the overall structure and preventing the electronic component from damage due to the high temperature is an important issue in the related medical equipment industry.

### Summary of the Invention

This in mind, the present invention aims at providing a polymerase chain reaction heating device and a related polymerase chain reaction temperature control system for solving above drawbacks.

This is achieved by a polymerase chain reaction heating device and a related polymerase chain reaction temperature control system according to claims 1 and 9. The dependent claims pertain to corresponding further developments and improvements.

As will be seen more clearly from the detailed description following below, the claimed polymerase chain reaction heating device includes at least one circuit board, a heater, a first thermal conductive component and a second thermal conductive component. The at least one circuit board has an opening structure, and a first surface and a second surface opposite to each other. The heater is disposed inside the opening structure and exposed through the first surface and the second surface. The first thermal conductive component is disposed on the first surface. The first thermal conductive component includes a first reagent storage portion and at least one first heat conduction portion. The second thermal conductive component is disposed on the second surface. The second thermal conductive component includes a second reagent storage portion and at least one second heat conduction portion. The second reagent storage portion is assembled with the first reagent storage portion to form a reagent holder. The at least one first heat conduction portion and the at least one second heat conduction portion respectively abut against two opposite positions of the heater for transmitting heat generated by the heater towards the reagent holder.

### Brief Description of the Drawings

In the following, the invention is further illustrated by way of example, taking reference to the accompanying drawings. Thereof:
FIG. 1 is a diagram of a polymerase chain reaction temperature control system according to an embodiment of the present invention,
FIG. 2 is an exploded diagram of a polymerase chain reaction heating device according the embodiment of the present invention,
FIG. 3 is an assembly diagram of the polymerase chain reaction heating device according the embodiment of the present invention, and
FIG. 4 is a diagram of the polymerase chain reaction heating device in partial separation according the embodiment of the present invention.

### Detailed Description

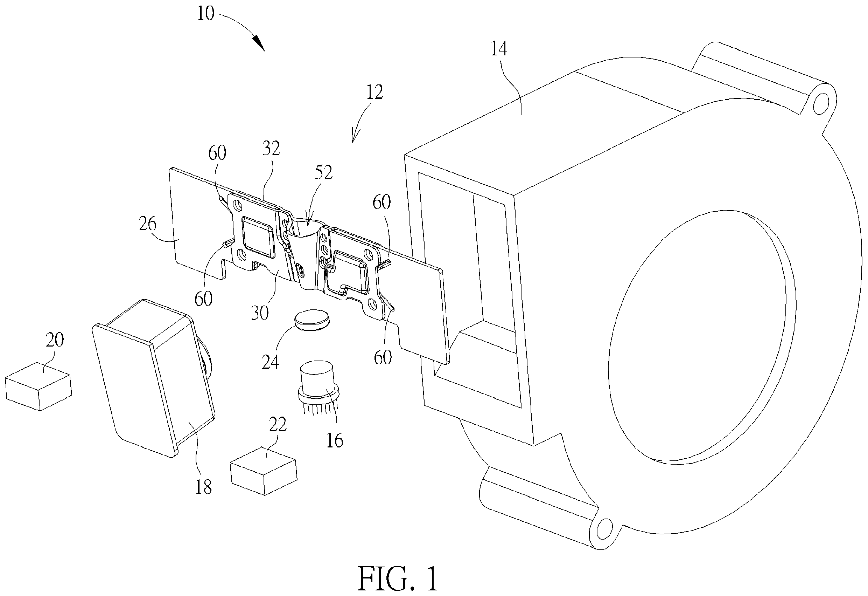

Please refer to FIG. 1. FIG. 1 is a diagram of a polymerase chain reaction temperature control system 10 according to an embodiment of the present invention. The polymerase chain reaction (PCR) is a method widely used to make millions to billions of copies of a DNA sample rapidly. The polymerase chain reaction temperature control system 10 can at least include a polymerase chain reaction heating device 12, a heat dissipation device 14, a light source 16, a spectrometer 18, a power supply 20 and an operation processor 22. When the polymerase chain reaction temperature control system 10 is operated, a reagent container (which is not shown in the figure) containing reagents and reactants can be placed into the polymerase chain reaction heating device 12, and the power supply 20 can be switched on to provide energy to the polymerase chain reaction heating device 12 for raising the temperature; when the polymerase chain reaction heating device 12 is heated to a preset maximum temperature, the heat dissipation device 14 can be switched on to dissipate heat from the polymerase chain reaction heating device 12 for cooling to a preset minimum temperature.

The reagent container of the polymerase chain reaction heating device 12 can be heated and cooled rapidly and repeatedly to execute steps of denaturing, primer annealing and primer extension for the reagents and the reactants contained by the reagent container. The operation processor 22 can switch on the light source 16 to emit an illumination beam The illumination beam can be an excitation beam; the illumination beam can be projected onto the reagent container through a lens assembly 24 from a bottom of the polymerase chain reaction heating device 12, so as to excite fluorescent substance inside the reagent container to emit fluorescence, and the fluorescence can pass through the lens assembly 24 and be received by the spectrometer 18 as a detection signal. Final, the spectrometer 18 can transmit the received detection signal to the operation processor 22 for signal analysis, so as to execute qualitative analysis or quantitative analysis of a target inside the reagent container.

In the present invention, the polymerase chain reaction heating device 12 can be heated to 94 to 98 degrees Celsius in the step of denaturing, and a double-stranded DNA can be dissociated into single-stranded DNAs via the high temperature to break the hydrogen bonds between bases. In the step of primer annealing, the polymerase chain reaction heating device 12 can be cooled to 55 to 75 degrees Celsius to bind the primer and the gene segment of the target DNA. The polymerase chain reaction heating device 12 can be further heated to 68 to 72 degrees Celsius in the step of primer extension to copy the gene segment of the target DNA. The foresaid three steps can belong to a set of thermal cycles, which can amplify the target DNA for detection.

For temperature adjustment, the polymerase chain reaction temperature control system 10 of the present invention can provide the new-type polymerase chain reaction heating device 12 with a thin structural feature, and specific design of the polymerase chain reaction heating device 12 can prevent solders of the internal circuit from melting due to rapid temperature rise, thereby improving the product durability. In addition, the heat dissipation device 14 can be a fan or a thermal electric cooler, and the present invention can utilize one or a plurality of heat dissipation devices 14 to achieve the rapid cooling effect. The light source 16 can be a light emitting diode or a laser or any light source with a wavelength consistent with fluorescent dyes. The illumination beam of the light source 16 can excite the fluorescent dyes to generate fluorescence. The lens assembly 24 can be a combination of various types of lenses. The operation processor 22 can be an external processor adapted to control other electronic components.

Arrangement of the polymerase chain reaction heating device 12, the heat dissipation device 14, the light source 16, the spectrometer 18, the power supply 20 and the operation processor 22 of the present invention is not limited to the embodiment shown in the figure. Any system having the light source 16 and a related light emission path located on a side of the polymerase chain reaction heating device 12, and the illumination beam of the light source 16 passing through the lens assembly 24 towards the polymerase chain reaction heating device 12 for exciting the fluorescent dyes inside the reagent container, and the fluorescent signal generated by the reagent container passing through the lens assembly 24 to be received as the detection signal by the spectrometer 18 can conform to a design scope of the present invention. In this embodiment, the light source 16 and the lens assembly 24 are disposed under the reagent container of the polymerase chain reaction heating device 12, and a practical application is not limited to the above-mentioned embodiment.

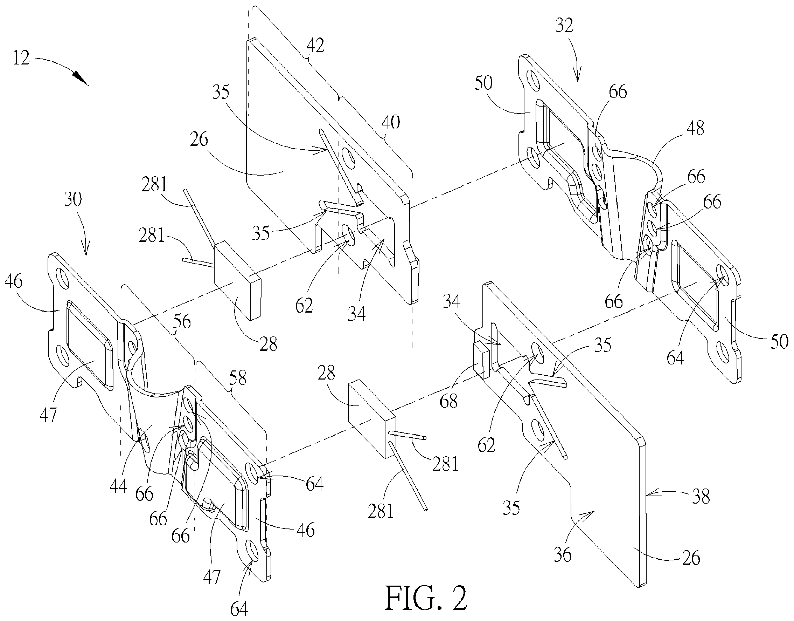

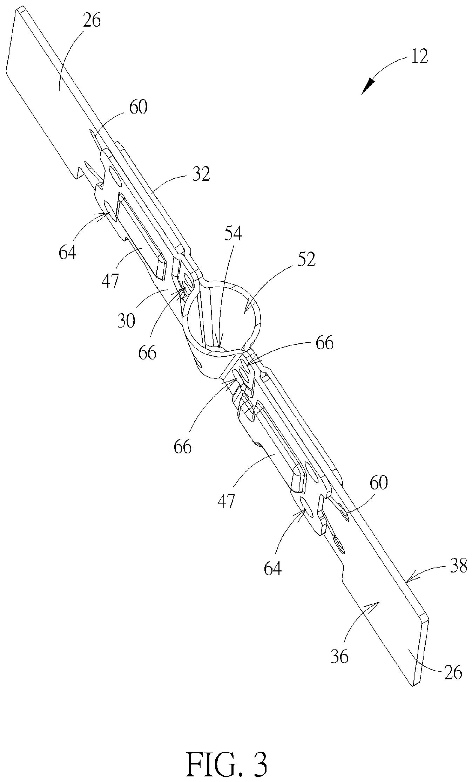

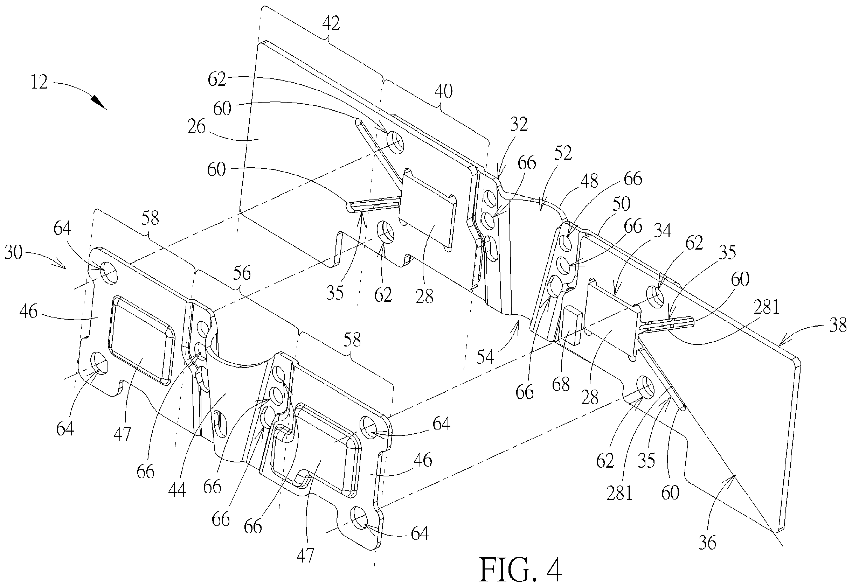

Please refer to FIG. 2 to FIG. 4. FIG. 2 is an exploded diagram of the polymerase chain reaction heating device 12 according the embodiment of the present invention. FIG. 3 is an assembly diagram of the polymerase chain reaction heating device 12 according the embodiment of the present invention. FIG. 4 is a diagram of the polymerase chain reaction heating device 12 in partial separation according the embodiment of the present invention. The polymerase chain reaction heating device 12 can include a circuit board 26, a heater 28, a first thermal conductive component 30 and a second thermal conductive component 32. In the preferred embodiment, the polymerase chain reaction heating device 12 can have two circuit boards 26 spaced from each other. Each of the circuit boards 26 can have an opening structure 34, and a first surface 36 and a second surface 38 opposite to each other. The opening structure 34 can penetrate the first surface 36 and the second surface 38. Besides, the circuit board 26 can be divided into a shielded area 40 and a non-shielded area 42 connected to each other; the opening structure 34 can be formed on the shielded area 40.

The heater 28 can be a temperature-controlled metal, a ceramic substrate, or any component of generating heat by electricity. A number of the heater 28 can correspond to a number of the circuit board 26. Each heater 28 can be disposed on the opening structure 34 of the corresponding circuit board 26, and can be further partly exposed through the first surface 36 and the second surface 38. The circuit board 26 can further have a lead slot 35 connected to the opening structure 34; when the heater 28 is engaged with the opening structure 34, a lead 281 of the heater 28 can be disposed inside the lead slot 35, and the solder or other applicable material can be used to fix the lead 281 on a conductive contact 60 of the circuit board 26.

The present invention can engage the heater 28 into the opening structure 34 for reducing a thickness of the overall structure, instead of disposing the heater 28 on an outer surface of the circuit board 26. The present invention may not use any extra fixing component, and can fix the first thermal conductive component 30 and the second thermal conductive component 32 respectively on two opposite surfaces of the circuit board 26 to clamp the heater 28 for constraint; however, the practical application is not limited to the foresaid embodiment. Therefore, the present invention can engage the heater 28 with the opening structure 34 of the circuit board 26 for structural configuration without the extra fixing component, so as to effectively decrease the thickness of the polymerase chain reaction heating device 12.

Moreover, the first thermal conductive component 30 and the second thermal conductive component 32 can be respectively disposed on the first surface 36 and the second surface 38 of the circuit board 26. The first thermal conductive component 30 can include a first reagent storage portion 44 and a first heat conduction portion 46; structural design of the second thermal conductive component 32 can be symmetrical to structural design of the first thermal conductive component 30, so that the second thermal conductive component 32 can include a second reagent storage portion 48 and a second heat conduction portion 50. When the first thermal conductive component 30 and the second thermal conductive component 32 are respectively attached to two opposite surfaces of the circuit board 26, the first reagent storage portion 44 can be assembled with the second reagent storage portion 48 to form a reagent holder 52 for accommodating the reagent container. It should be mentioned that a bottom of the reagent holder 52 may have an opening 54, and a size of the opening 54 can be smaller than a size of the reagent container to prevent the reagent container from falling out of the reagent holder 52. The illumination beam of the light source 16 can pass through the opening 54 to project onto the fluorescent substance inside the reagent container. The first heat conduction portion 46 and the second heat conduction portion 50 can be respectively fixed onto the first surface 36 and the second surface 38 of the circuit board 26 via external elements (which are not shown in the figures). The first heat conduction portion 46 and the second heat conduction portion 50 can cover the opening structure 34 and the heater 28 engaged inside the opening structure 34 for constraining a movement of the heater 28.

In the preferred embodiment, the two first heat conduction portions 46 of the first thermal conductive component 30 can be respectively disposed on two opposite sides of the first reagent storage portion 44, and the two second heat conduction portions 50 of the second thermal conductive component 32 can be respectively disposed on two opposite sides of the second reagent storage portion 48. Each of the first heat conduction portions 46 and the related second heat conduction portion 50 can abut against two opposite sides of the corresponding heater 28 respectively. The operation processor 22 can drive the power supply 20 to provide electricity to the heater 28, and heat generated by the heater 28 can be conducted to the reagent holder 52 formed by the first reagent storage portion 44 and the second reagent storage portion 48 through the first heat conduction portion 46 and the second heat conduction portion 50.

Generally, at least one thermal conductive layer (which is not shown in the figures) can be optionally disposed between the heater 28 and the first heat conduction portion 46 and further between the heater 28 and the second heat conduction portion 50. The thermal conductive layer can be thermal paste with high thermal conductivity. The thermal conductive layer can be beneficial to heat dissipation, and further ensure that the heater 28 can be closely attached to the first heat conduction portion 46 and the second heat conduction portion 50 without air gaps, so as to effectively increase thermal conductivity of the first thermal conductive component 30 and the second thermal conductive component 32 and a heating speed of the polymerase chain reaction heating device 12.

Please refer to FIG. 2 to FIG. 4. Each of the first thermal conductive component 30 and the second thermal conductive component 32 can be divided into several regions due to the functional demand, such as the shielded area 40 and the non-shielded area 42 divided from the circuit board 26. Taking the first thermal conductive component 30 as an example, the first thermal conductive component 30 can be further divided into an accommodating region 56 and a positioning region 58 connected to each other. The first reagent storage portion 44 can be disposed inside the accommodating region 56 to along with a gap between the two circuit boards 26. The first heat conduction portion 46 can be disposed inside the positioning region 58. The second thermal conductive component 32 may have structural design similar to ones of the first thermal conductive component 30, and the detailed description is omitted herein for simplicity. When the first thermal conductive component 30 and the second thermal conductive component 32 are attached to the circuit board 26, the positioning regions 58 of the first thermal conductive component 30 and the second thermal conductive component 32 can face towards the shielded area 40 of the circuit board 26, and the first heat conduction portions 46 and the second heat conduction portions 50 can cover the shielded area 40 to clamp the circuit board 26. The non-shielded area 42 of the circuit board 26 cannot be covered by the first thermal conductive component 30 and the second thermal conductive component 32.

The first thermal conductive component 30 and/or the second thermal conductive component 32 can preferably include a covering portion 47 located inside the positioning region 58 and disposed on the first heat conduction portion 46 and/or the second heat conduction portion 50. The covering portion 47 can cover a part of the heater 28 that is exposed through and protrudes from the first surface 36 and the second surface 38. Generally, the covering portion 47 can be integrated with the positioning region 58 monolithically in a stamping manner or any available manner; however, the practical application is not limited to the foresaid embodiment.

Besides, although the heater 28 is engaged with the opening structure 34 of the circuit board 26 that is located inside the shielded area 40, a conductive contact 60 of the heater 28 electrically connected to the circuit board 26 can be outwardly extended to locate inside the non-shielded area 42. As mentioned above, the non-shielded area 42 is not covered by the first thermal conductive component 30 and the second thermal conductive component 32, so that the solder of the conductive contact 60 is not melted by the heat conducted from the first thermal conductive component 30 and the second thermal conductive component 32. Moreover, the circuit board 26 can further have at least one through hole structure 62 formed on the shielded area 40; each of the first thermal conductive component 30 and the second thermal conductive component 32 can have at least one locking hole structure 64. The locking hole structure 64 can be formed on the positioning region 58 to align with the through hole structure 62. The present invention can utilize an external element, such as a screw or a bolt, to insert into the locking hole structure 64 and the through hole structure 62 for fixing operation.

Each of the first thermal conductive component 30 and the second thermal conductive component 32 can have at least one heat dissipating hole structure 66 formed on the accommodating region 56, and disposed adjacent to the reagent holder 52 formed by the first reagent storage portion 44 and the second reagent storage portion 48. The shielded area 40 of the circuit board 26 can be attached to the positioning regions 58 of the first thermal conductive component 30 and/or the second thermal conductive component 32. The accommodating regions 56 of the first thermal conductive component 30 and the second thermal conductive component 32 can be located inside the gap between the two circuit boards 26, and the heat dissipating hole structures 66 of the accommodating region 56 can provide preferred heat dissipation efficiency via air flow. That is to say, the heater 28 located inside the shielded area 40 can heat the positioning regions 58 of the first thermal conductive component 30 and the second thermal conductive component 32, and the heat can be conducted from the positioning region 58 to the reagent container set inside the reagent holder 52 through the accommodating region 56; when the heat dissipation device 14 is switched on, the air flow can rapidly pass through the heat dissipating hole structure 66 to dissipate the heat accumulated in the accommodating region 56, so as to rapidly reduce the temperature of the reagent holder 52 and the related reagent container.

The first thermal conductive component 30 and the second thermal conductive component 32 can respectively have a plurality of heat dissipating hole structures 66 arranged on lateral sides of the first reagent storage portion 44 and the second reagent storage portion 48. The plurality of heat dissipating hole structures 66 can have the same size or different sizes. The size and arrangement of the heat dissipating hole structures 66 can depend on remaining space of the first thermal conductive component 30 or the second thermal conductive component 32 for preferred structural configuration. The heat dissipating hole structures 66 may be used to fix the thermal conductive components. For example, the polymerase chain reaction heating device 12 can pass the external element (which is not shown in the figures) through the heat dissipating hole structure 66 in the middle to fix the first thermal conductive component 30 and the second thermal conductive component 32 together; the practical application is not limited to the foresaid embodiment.

Please refer to FIG. 2 to FIG. 4. The polymerase chain reaction heating device 12 can further include a temperature sensor 68 disposed on a position of the circuit board 26 adjacent to the reagent holder 52, and electrically connected to the operation processor 22 via the circuit board 26. The operation processor 22 can acquire a temperature parameter of the reagent holder 52 by a sensing result of the temperature sensor 68, for determining whether the reagent holder 52 reaches the required temperatures for each step of denaturing, primer annealing and primer extension, so as to decide whether to switch on or off the heater 28 and the heat dissipation device 14. The temperature sensor 68 can be covered by the covering portion 47 for protection.

In conclusion, the polymerase chain reaction temperature control system and the polymerase chain reaction heating device of the present invention can form the opening structure on the circuit board, and the heater can be engaged inside the opening structure to be exposed through the opposite surfaces of the circuit board for decreasing the thickness of the overall structure. In addition, each of the first thermal conductive component and the second thermal conductive component can include the covering portion used to cover the heater and the temperature sensor; the conductive contact of the lead connected between the heater and the circuit board can be extended and located inside the non-shielded area of the circuit board, and cannot be covered by the first thermal conductive component and the second thermal conductive component, so as to prevent the conductive contact from damage due to the high temperature in the heating process. Comparing to the prior art, the present invention can effectively reduce the structural size of the polymerase chain reaction temperature control system, and the polymerase chain reaction temperature control system can be stably applied for the high temperature heating process of the heater, without causing failures of the temperature adjustment function and the reagent detection function.

## Claims

1. A polymerase chain reaction heating device (12), **characterized by** comprising:
at least one circuit board (26), having an opening structure (34), and a first surface (36) and a second surface (38) opposite to each other;
a heater (28) disposed inside the opening structure (34) and exposed through the first surface (36) and the second surface (38);
a first thermal conductive component (30) disposed on the first surface (36), the first thermal conductive component (30) comprising:
a first reagent storage portion (44); and
at least one first heat conduction portion (46); and
a second thermal conductive component (32) disposed on the second surface (38), the second thermal conductive component (32) comprising:
a second reagent storage portion (48) assembled with the first reagent storage portion (44) to form a reagent holder (52); and
at least one second heat conduction portion (50), the at least one first heat conduction portion (46) and the at least one second heat conduction portion (50) respectively abutting against two opposite positions of the heater (28) for transmitting heat generated by the heater (28) towards the reagent holder (52).

2. The polymerase chain reaction heating device (12) of claim 1, **characterized in that** the at least one circuit board (26) is divided into a shielded area (40) and a non-shielded area (42) connected with each other, the opening structure (34) is formed on the shielded area (40), the at least one first heat conduction portion (46) and the at least one second heat conduction portion (50) are disposed on the shielded area (40) to clamp the at least one circuit board (26).

3. The polymerase chain reaction heating device (12) of claim 2, **characterized in that** the heater (28) is electrically connected to a conductive contact (60) of the at least one circuit board (26), and the conductive contact (60) is disposed on the non-shielded area (42).

4. The polymerase chain reaction heating device (12) of claim 2, **characterized in that** the polymerase chain reaction heating device (12) further comprises two circuit boards (26) spaced to each other, the first thermal conductive component (30) comprises an accommodating region (56) and a positioning region (58) connected to each other, the first reagent storage portion (44) is disposed on the accommodating region (56) to along with a gap between the two circuit boards (26), the at least one first heat conduction portion (46) is disposed on the positioning region (58).

5. The polymerase chain reaction heating device (12) of claim 4, **characterized in that** the at least one circuit board (26) further has a through hole structure (62) formed on the shielded area (40), the first thermal conductive component (30) has a locking hole structure (64) formed on the positioning region (58) to align with the through hole structure (62) for locking operation.

6. The polymerase chain reaction heating device (12) of claim 4, **characterized in that** the first thermal conductive component (30) has at least one heat dissipating hole structure (66) formed on the accommodating region (56) and disposed adjacent to the first reagent storage portion (44).

7. The polymerase chain reaction heating device (12) of claim 1, **characterized in that** the polymerase chain reaction heating device (12) further comprises a temperature sensor (68) disposed on a position of the at least one circuit board (26) adjacent to the reagent holder (52).

8. The polymerase chain reaction heating device (12) of claim 7, **characterized in that** the first thermal conductive component (30) further comprises a covering portion (47) disposed on the at least one first heat conduction portion (46) and adapted to cover the heater (28) and the temperature sensor (68).

9. A polymerase chain reaction temperature control system (10), **characterized by** comprising:
a polymerase chain reaction heating device (12), comprising:
at least one circuit board (26), having an opening structure (34), and a first surface (36) and a second surface (38) opposite to each other;
a heater (28) disposed inside the opening structure (34) and exposed through the first surface (36) and the second surface (38);
a first thermal conductive component (30) disposed on the first surface (36), the first thermal conductive component (30) comprising:
a first reagent storage portion (44); and
at least one first heat conduction portion (46); and
a second thermal conductive component (32) disposed on the second surface (38), the second thermal conductive component (32) comprising:
a second reagent storage portion (48) assembled with the first reagent storage portion (44) to form a reagent holder (52); and
at least one second heat conduction portion (50), the at least one first heat conduction portion (46) and the at least one second heat conduction portion (50) respectively abutting against two opposite positions of the heater (28) for transmitting heat generated by the heater (28) towards the reagent holder (52);
a heat dissipation device (14) disposed adjacent to the polymerase chain reaction heating device (12) to dissipate heat from the reagent holder (52);
a light source (16) disposed adjacent to the reagent holder (52), an illumination beam emitted by the light source (16) being projected onto the reagent holder (52); and
a spectrometer (18) disposed adjacent to the reagent holder (52), and adapted to receive a detection signal generated by the illumination beam projected onto the reagent holder (52) for signal analysis.

10. The polymerase chain reaction temperature control system (10) of claim 9, **characterized in that** the at least one circuit board (26) is divided into a shielded area (40) and a non-shielded area (42) connected with each other, the opening structure (34) is formed on the shielded area (40), the at least one first heat conduction portion (46) and the at least one second heat conduction portion (50) are disposed on the shielded area (40) to clamp the at least one circuit board (26).

11. The polymerase chain reaction temperature control system (10) of claim 10, **characterized in that** the heater (28) is electrically connected to a conductive contact (60) of the at least one circuit board (26), and the conductive contact (60) is disposed on the non-shielded area (42).

12. The polymerase chain reaction temperature control system (10) of claim 10, **characterized in that** the polymerase chain reaction heating device (12) further comprises two circuit boards (26) spaced to each other, the first thermal conductive component (30) comprises an accommodating region (56) and a positioning region (58) connected to each other, the first reagent storage portion (44) is disposed on the accommodating region (56) to along with a gap between the two circuit boards (26), the at least one first heat conduction portion (46) is disposed one the positioning region (58).

13. The polymerase chain reaction temperature control system (10) of claim 12, **characterized in that** the at least one circuit board (26) further has a through hole structure (62) formed on the shielded area (40), the first thermal conductive component (30) has a locking hole structure (64) formed on the positioning region (58) to align with the through hole structure (62) for locking operation.

14. The polymerase chain reaction temperature control system (10) of claim 12, **characterized in that** the first thermal conductive component (30) has at least one heat dissipating hole structure (66) formed on the accommodating region (56) and disposed adjacent to the first reagent storage portion (44).

15. The polymerase chain reaction temperature control system (10) of claim 9, **characterized in that** the first thermal conductive component (30) further comprises a covering portion (47) disposed on the at least one first heat conduction portion (46) and adapted to cover the heater (28) and a temperature sensor (68) of the polymerase chain reaction heating device (12).

## Amended claims

### Amended claims in accordance with Rule 137(2) EPC.

1. A polymerase chain reaction heating device (12), **characterized by** comprising:
at least one circuit board (26), having an opening structure (34), and a first surface (36) and a second surface (38) opposite to each other;
a heater (28) disposed inside the opening structure (34) and exposed through the first surface (36) and the second surface (38);
a first thermal conductive component (30) disposed on the first surface (36), the first thermal conductive component (30) comprising:
a first reagent storage portion (44); and
at least one first heat conduction portion (46); and
a second thermal conductive component (32) disposed on the second surface (38), the second thermal conductive component (32) comprising:
a second reagent storage portion (48) assembled with the first reagent storage portion (44) to form a reagent holder (52); and
at least one second heat conduction portion (50), the at least one first heat conduction portion (46) and the at least one second heat conduction portion (50) respectively abutting against two opposite positions of the heater (28) for transmitting heat generated by the heater (28) towards the reagent holder (52).

2. The polymerase chain reaction heating device (12) of claim 1, **characterized in that** the at least one circuit board (26) is divided into a shielded area (40) and a non-shielded area (42) connected with each other, the opening structure (34) is formed on the shielded area (40), the at least one first heat conduction portion (46) and the at least one second heat conduction portion (50) are disposed on the shielded area (40) to clamp the at least one circuit board (26).

3. The polymerase chain reaction heating device (12) of claim 2, **characterized in that** the heater (28) is electrically connected to a conductive contact (60) of the at least one circuit board (26), and the conductive contact (60) is disposed on the non-shielded area (42).

4. The polymerase chain reaction heating device (12) of claim 2, **characterized in that** the polymerase chain reaction heating device (12) further comprises two circuit boards (26) spaced to each other, the first thermal conductive component (30) comprises an accommodating region (56) and a positioning region (58) connected to each other, the first reagent storage portion (44) is disposed on the accommodating region (56) to align with a gap between the two circuit boards (26), the at least one first heat conduction portion (46) is disposed on the positioning region (58).

5. The polymerase chain reaction heating device (12) of claim 4, **characterized in that** the at least one circuit board (26) further has a through hole structure (62) formed on the shielded area (40), the first thermal conductive component (30) has a locking hole structure (64) formed on the positioning region (58) to align with the through hole structure (62) for locking operation.

6. The polymerase chain reaction heating device (12) of claim 4, **characterized in that** the first thermal conductive component (30) has at least one heat dissipating hole structure (66) formed on the accommodating region (56) and disposed adjacent to the first reagent storage portion (44).

7. The polymerase chain reaction heating device (12) of claim 1, **characterized in that** the polymerase chain reaction heating device (12) further comprises a temperature sensor (68) disposed on a position of the at least one circuit board (26) adjacent to the reagent holder (52).

8. The polymerase chain reaction heating device (12) of claim 7, **characterized in that** the first thermal conductive component (30) further comprises a covering portion (47) disposed on the at least one first heat conduction portion (46) and adapted to cover the heater (28) and the temperature sensor (68).

9. A polymerase chain reaction temperature control system (10), **characterized by** comprising:
a polymerase chain reaction heating device (12), comprising:
at least one circuit board (26), having an opening structure (34), and a first surface (36) and a second surface (38) opposite to each other;
a heater (28) disposed inside the opening structure (34) and exposed through the first surface (36) and the second surface (38);
a first thermal conductive component (30) disposed on the first surface (36), the first thermal conductive component (30) comprising:
a first reagent storage portion (44); and
at least one first heat conduction portion (46); and
a second thermal conductive component (32) disposed on the second surface (38), the second thermal conductive component (32) comprising:
a second reagent storage portion (48) assembled with the first reagent storage portion (44) to form a reagent holder (52); and
at least one second heat conduction portion (50), the at least one first heat conduction portion (46) and the at least one second heat conduction portion (50) respectively abutting against two opposite positions of the heater (28) for transmitting heat generated by the heater (28) towards the reagent holder (52);
a heat dissipation device (14) disposed adjacent to the polymerase chain reaction heating device (12) to dissipate heat from the reagent holder (52);
a light source (16) disposed adjacent to the reagent holder (52), and configured to emit an illumination beam to be projected onto the reagent holder (52); and
a spectrometer (18) disposed adjacent to the reagent holder (52), and adapted to receive a detection signal generated by the illumination beam projected onto the reagent holder (52) for signal analysis.

10. The polymerase chain reaction temperature control system (10) of claim 9, **characterized in that** the at least one circuit board (26) is divided into a shielded area (40) and a non-shielded area (42) connected with each other, the opening structure (34) is formed on the shielded area (40), the at least one first heat conduction portion (46) and the at least one second heat conduction portion (50) are disposed on the shielded area (40) to clamp the at least one circuit board (26).

11. The polymerase chain reaction temperature control system (10) of claim 10, **characterized in that** the heater (28) is electrically connected to a conductive contact (60) of the at least one circuit board (26), and the conductive contact (60) is disposed on the non-shielded area (42).

12. The polymerase chain reaction temperature control system (10) of claim 10, **characterized in that** the polymerase chain reaction heating device (12) further comprises two circuit boards (26) spaced to each other, the first thermal conductive component (30) comprises an accommodating region (56) and a positioning region (58) connected to each other, the first reagent storage portion (44) is disposed on the accommodating region (56) to align with a gap between the two circuit boards (26), the at least one first heat conduction portion (46) is disposed one the positioning region (58).

13. The polymerase chain reaction temperature control system (10) of claim 12, **characterized in that** the at least one circuit board (26) further has a through hole structure (62) formed on the shielded area (40), the first thermal conductive component (30) has a locking hole structure (64) formed on the positioning region (58) to align with the through hole structure (62) for locking operation.

14. The polymerase chain reaction temperature control system (10) of claim 12, **characterized in that** the first thermal conductive component (30) has at least one heat dissipating hole structure (66) formed on the accommodating region (56) and disposed adjacent to the first reagent storage portion (44).

15. The polymerase chain reaction temperature control system (10) of claim 9, **characterized in that** the first thermal conductive component (30) further comprises a covering portion (47) disposed on the at least one first heat conduction portion (46) and adapted to cover the heater (28) and a temperature sensor (68) of the polymerase chain reaction heating device (12).
